# EUROPEAN PATENT APPLICATION

(11) **EP 4 832 546 A1**
(43) Date of publication of application: **28.10.2026**
(21) Application number: 23961855.6
(22) Date of filing: 20.12.2023
(51) Int. Cl.: H04W 24/02, H04L 41/16, H04W 72/12

(54) **COMMUNICATION METHOD, TERMINAL, NETWORK DEVICE, SYSTEM, AND STORAGE MEDIUM**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2023/140412
(87) International publication number: WO 2025/129516

(57) **Abstract**

The present disclosure relates to a communication method, a terminal, a network device, a system, and a storage medium. The method comprises: sending first information to a network device, the first information being used for indicating AI functions supported by a terminal, the AI functions being associated with values of parameters in a first parameter set, the first parameter set comprising one or more configuration parameters, and different AI functions corresponding to different value ranges of the configuration parameters in the first parameter set. Thus, mapping relationships between AI functions and values of a parameter set are configured, and corresponding AI functions are determined by means of parameter sets configured with different values, thereby achieving management of lifecycles of the AI functions on the basis of the parameter set.

## Description

### TECHNICAL FIELD

The present disclosure relates to the field of communication technology, and in particular to a communication method, terminal, network device, system and storage medium.

### BACKGROUND

Artificial intelligence technology has made continuous breakthroughs in many fields, and AI (Artificial Intelligence) technology is also accelerating its cross-penetration with other disciplines, while its development integrates knowledge from different disciplines, it also provides new directions and methods for the development of different disciplines.

A research project on the application of artificial intelligence technology in wireless air interface communication has been established in related arts. The project aims to investigate how to introduce AI technology into wireless air interface communication and explore the assistance and improvement of AI technology in wireless air interface transmission technology.

### SUMMARY

In order to overcome the technical problem of indefinite lifecycle management information for the AI functionality in related arts, the present disclosure provides a communication method, terminal, network device, system, and storage medium.

Embodiments of the present disclosure provide a communication method, terminal, network device, system, and storage medium.

According to a first aspect of the embodiments of the present disclosure, a communication method is provided, performed by a terminal, the method including:
sending first information to a network device, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

According to a second aspect of the embodiments of the present disclosure, a communication method is provided, performed by a network device, the method including:
receiving first information sent by a terminal, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

According to a third aspect of the embodiments of the present disclosure, a terminal is provided, including:
a transceiver module, configured to send first information to a network device, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

According to a fourth aspect of the embodiments of the present disclosure, a network device is provided, including:
a transceiver module, configured to receive first information sent by a terminal, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

According to a fifth aspect of the embodiments of the present disclosure, a terminal is provided, including:
one or more processors;
a memory coupled to the one or more processors, where the memory includes executable instructions that, when being executed by the one or more processors, cause the terminal to perform communication method described in any item of the first aspect of the present disclosure.

According to a sixth aspect of the embodiments of the present disclosure, a network device is provided, including:
one or more processors;
a memory coupled to the one or more processors, where the memory includes executable instructions that, when being executed by the one or more processors, cause the first device to perform the communication method described in any item of the second aspect of the present disclosure.

According to a seventh aspect of the present disclosure, a communication system is provided, including a terminal and a network device, where the terminal is configured to implement the communication method described in any item of the first aspect of the present disclosure, and the network device is configured to implement the communication method described in any item of the second aspect of the present disclosure.

According to an eighth aspect of the present disclosure, a storage medium is provided that stores instructions that, when being executed on a communication device, cause the communication device to perform the communication method as described in any of the first or second aspects of the present disclosure.

With the above method, the first information is sent to the network device, the first information indicates the AI functionalities supported by the terminal, the AI functionalities are associated with values of parameters in a first parameter set, the first parameter set includes one or more configuration parameters, and different AI functionalities correspond to different value ranges of the configuration parameters in the first parameter set. Accordingly, the mapping relationship between AI functionalities and values of the parameter set is configured, and by configuring the parameter set with the parameter set with different value, the corresponding AI functionalities are determined, enabling lifecycle management of AI functionalities based on the parameter set.

### BRIEF DESCRIPTION OF THE DRAWINGS

To more clearly illustrate the technical solutions in the embodiments of the present disclosure, the accompanying drawings required for the description of the embodiments are introduced below. The following drawings are only some embodiments of the present disclosure and do not impose specific limitations on the protection scope of the present disclosure.
FIG. 1a is a schematic diagram of an architecture of a communication system according to an embodiment of the present disclosure.
FIG. 1b is a schematic diagram illustrating an AI-functionality configuration method according to an embodiment of the present disclosure.
FIG. 1c is a schematic diagram illustrating another AI-functionality configuration method according to an embodiment of the present disclosure.
FIG. 2 is an interactive schematic diagram illustrating a communication method according to an embodiment of the present disclosure.
FIG. 3 is a schematic flowchart illustrating a communication method according to an embodiment of the present disclosure.
FIG. 4 is a schematic flowchart illustrating a communication method according to an embodiment of the present disclosure.
FIG. 5 is a schematic diagram illustrating a communication method according to an embodiment of the present disclosure.
FIG. 6 is a structural schematic diagram of a terminal 6100 proposed in an embodiment of the present disclosure.
FIG. 7 is a structural schematic diagram of a network device 7100 proposed in an embodiment of the present disclosure.
FIG. 8 is a structural schematic diagram of a communication device 8100 proposed in an embodiment of the present disclosure.

### DETAILED DESCRIPTION

The embodiments of the present disclosure provide a communication method, terminal, network device, system, and storage medium.

In a first aspect, the embodiments of the present disclosure provide a communication method performed by a terminal, the method including:
sending first information to a network device, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

With the above method, the mapping relationship between AI functionalities and the parameter set is specified. By configuring the mapping relationship between values of the parameter set and AI functionalities, it can perform lifecycle management of the AI functionalities based on the parameter set, which avoids the problem of indefinite relationship between configuration parameters and AI functionalities.

In conjunction with some embodiments of the first aspect, in some embodiments, the AI functionality is associated with an AI feature, and the AI feature includes one or more AI functionalities.

In conjunction with some embodiments of the first aspect, in some embodiments, the method further includes:
receiving second information sent by the network device, where the second information includes a first configuration parameter, the first configuration parameter is used to indicate a configuration parameter in the first parameter set and a value range of the configuration parameter;
determining the first configuration parameter and associating the AI functionalities; and
determining a first AI functionality corresponding to the first configuration parameter.

In conjunction with some embodiments of the first aspect, in some embodiments, determining the first AI functionality corresponding to the first configuration parameter includes:
obtaining a mapping relationship between the AI functionalities and the first parameter set; and
determining, from the mapping relationship, the first AI functionality that matches the first configuration parameter.

In conjunction with some embodiments of the first aspect, in some embodiments, the method further includes:
determining that there is no AI functionality matching the first configuration parameter in the mapping relationship, and processing the first configuration parameter through a non-AI processing procedure.

In conjunction with some embodiments of the first aspect, in some embodiments, obtaining the mapping relationship between the AI functionalities and the first parameter set includes:
obtaining a configuration protocol; and
determining the mapping relationship according to the configuration protocol.

In conjunction with some embodiments of the first aspect, in some embodiments, the method further includes:
determining that the first AI functionality does not match a second AI functionality that is currently running on the terminal, and disabling the second AI functionality; and
activating the first AI functionality.

In conjunction with some embodiments of the first aspect, in some embodiments, the method further includes:
determining that the first AI functionality is activated in the terminal, and sending third information to the network device, where the third information is used to indicate the network device to activate the first AI functionality in the network device according to the third information.

In the above embodiments, the first information is sent to the network device, the first information is sued to indicate the AI functionalities supported by the terminal, the AI functionalities are associated with values of parameters in the first parameter set, the first parameter set includes one or more configuration parameters, and different AI functionalities correspond to different value ranges for the configuration parameters in the first parameter set. Accordingly, the mapping relationship between AI functionalities and parameter set values is configured, and by configuring the parameter set with different value, the corresponding AI functionalities are determined, enabling lifecycle management of AI functionalities based on the parameter set.

In a second aspect, the embodiments of the present disclosure provide a communication method performed by a network device, the method including:
receiving first information sent by a terminal, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

With the above method, the mapping relationship between values of the parameter set and the AI functionalities is configured in the network device, which allows different AI functionalities to correspond to different configuration parameter values, specifies the relationship between the configuration parameters and the AI functionalities, and avoids the problem of disordered AI functionality lifecycle management caused by ambiguous parameter configuration.

In conjunction with some embodiments of the second aspect, in some embodiments, the AI functionality is associated with an AI feature, and the AI feature includes one or more AI functionalities.

In conjunction with some embodiments of the second aspect, in some embodiments, the method further includes:
generating second information based on the AI functionalities, where the second information includes a first configuration parameter, and the first configuration parameter is used to indicate a configuration parameters in the first parameter set and a value range of the configuration parameter; and
sending the second information to the terminal.

In conjunction with some embodiments of the second aspect, in some embodiments, generating the second information based on the AI functionalities includes:
obtaining a mapping relationship between the AI functionalities and the first parameter set;
determining the first configuration parameter according to the mapping relationship; and
generating the second information according to the first configuration parameter.

In conjunction with some embodiments of the second aspect, in some embodiments, obtaining the mapping relationship between the AI functionalities and the first parameter set includes:
obtaining a configuration protocol; and
determining the mapping relationship between the AI functionalities and the first parameter set according to the configuration protocol.

In conjunction with some embodiments of the second aspect, in some embodiments, the method further includes:
receiving third information sent by the terminal;
activating the first AI functionality corresponding to the first configuration parameter in the network device according to the third information.

In the above embodiments, the first information sent by the terminal is received, the first information is used to indicate the AI functionalities supported by the terminal, the AI functionalities are associated with values of parameters in a first parameter set, the first parameter set includes one or more configuration parameters, and different AI functionalities correspond to different value ranges for the configuration parameters in the first parameter set. Accordingly, the mapping relationship between the values of the parameter set and the AI functionalities is configured in the network device, avoiding the problem of disordered AI functionality lifecycle management caused by ambiguous parameter configuration.

In a third aspect, the embodiments of the present disclosure provide a terminal, including:
a transceiver module, configured to send first information to a network device, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

In a fourth aspect, the embodiments of the present disclosure provide a network device, including:
a transceiver module, configured to receive first information sent by a terminal, where the first information is used to indicate AI functionalities supported by the terminal, the AI functionalities are associated with values of parameters in a first parameter set, the first parameter set includes one or more configuration parameters, and different AI functionalities correspond to different value ranges of the configuration parameters in the first parameter set.

In a fifth aspect, the embodiments of the present disclosure provide a terminal, including:
one or more processors; and
a memory coupled to the one or more processors, where the memory includes executable instructions that, when being executed by the one or more processors, cause the terminal to perform the communication method described in any item of the first aspect of the present disclosure.

In a sixth aspect, the embodiments of the present disclosure provide a network device, including:
one or more processors; and
a memory coupled to the one or more processors, where the memory includes executable instructions that, when being executed by the one or more processors, cause the first device to perform the communication method described in any item of the second aspect of the present disclosure.

In a seventh aspect, the embodiments of the present disclosure provide a communication system including a terminal and a network device, where the terminal is configured to implement the communication method described in any item of the first aspect of the present disclosure, and the network device is configured to implement the communication method described in any item of the second aspect of the present disclosure.

In an eighth aspect, the embodiments of the present disclosure provide a storage medium storing instructions that, when being executed on a communication device, cause the communication device to perform the communication method as described in any one of the first or second aspects of the present disclosure.

With the above method, the first information is sent to the network device, the first information is used to indicate the AI functionalities supported by the terminal, the AI functionalities are associated with values of parameters in a first parameter set, the first parameter set includes one or more configuration parameters, and different AI functionalities correspond to different value ranges for the configuration parameters in the first parameter set. Accordingly, the mapping relationship between AI functionalities and values of the parameter set is configured, and by configuring the parameter set with different values, the corresponding AI functionalities are determined, enabling lifecycle management of AI functionalities based on the parameter set.

It is understood that the aforementioned terminal, network device, communication system, storage medium, and computer program are all used to perform the methods proposed in the embodiments of the present disclosure. Therefore, for the beneficial effects they can achieve, reference can be made to the beneficial effects in the corresponding methods, which will not be repeated here.

The embodiments of the present disclosure provide a communication method, terminal, network devices system, and storage medium. In some embodiments, terms such as communication method and information processing method can be used interchangeably, terms such as information processing device and communication device can be used interchangeably, and terms such as information processing system and communication system can be used interchangeably.

The embodiments of the present disclosure are not exhaustive, but are merely illustrative of some embodiments, and are not intended to limit the scope of protection of the present disclosure. Each step in a certain embodiment can be implemented as an independent embodiment and the steps can be arbitrarily combined if there is no contradiction. For example, a solution with some steps in a certain embodiment removed can also be implemented as an independent embodiment, and the order of the steps in a certain embodiment can be arbitrarily exchanged. In addition, the optional implementations in a certain embodiment can be arbitrarily combined, and furthermore, the embodiments can be arbitrarily combined. For example, some or all steps of different embodiments can be arbitrarily combined, and a certain embodiment can be arbitrarily combined with the optional implementations of other embodiments.

In the embodiments of the present disclosure, if there is no special indication or logical conflict, the terms and/or descriptions among the embodiments are consistent and can be referenced by each other, and the technical features in different embodiments can be combined to form a new embodiment based on their inherent logical relationships.

The terminology used in the embodiments of the present disclosure is for the purpose of describing specific embodiments only and is not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc. For example, in the cases where articles such as "a", "an", or "the" in English are used in translation, the noun following the article may be understood as a singular expression form or a plural expression form.

In the embodiments of the present disclosure, "a plurality of" refers to two or more.

In some embodiments, the terms such as "at least one of", "one or more", "a plurality of", and "multiple" can be used interchangeably.

In some embodiments, descriptions such as "at least one of A or B", "A and/or B", "in one case, A, and in another case, B", or "in response to one case, A, and in response to another case, B" can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, C, etc.

In some embodiments, descriptions such as "A or B" may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, C, etc.

The prefixes such as "first" and "second" in the embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first device" as an example, the number of "devices" can be one or more. In addition, the objects modified by different prefixes can be the same or different. For example, if the description object is "device", then the "first device" and the "second device" can be the same device or different devices, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "in response to ...", "in response to determining...", "in the case of...", "at the time of...", "when", "if ...", "provided...", etc. can be used interchangeably.

In some embodiments, the terms such as "greater than", "greater than or equal to", "not smaller than", "more than", "more than or equal to", "not less than", "higher than", "higher than or equal to", "not lower than", and "above" can be used interchangeably, and terms such as "smaller than", "smaller than or equal to", "not greater than", "less than", "less than or equal to", "not more than", "lower than", "lower than or equal to", "not higher than", and "below" can be used interchangeably.

In some embodiments, the apparatus, etc., can be interpreted as physical or virtual, their names are not limited to the names described in the embodiments, and the terms such as "apparatus", "equipment", "device", "circuit", "network element", "node", "function", "unit", "section", "system", "network", "chip", "chip system", "entity", and "subject" can be used interchangeably.

In some embodiments, "network" can be interpreted as apparatuses included in the network, such as an access network device, a core network device, etc.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" can be used interchangeably.

In some embodiments, the access network device, core network device, or network device can be replaced by a terminal. For example, the embodiments of the present disclosure can also be applied to structures where communication between the access network device, core network device, or network device and the terminal is replaced by communication between multiple terminals (e.g., device-to-device (D2D), vehicle-to-everything (V2X), etc.). In this case, the structure can also be configured such that the terminal has all or part of the functions of the access network device. Furthermore, the terms such as "uplink" and "downlink" can be replaced with terms corresponding to communication between terminals (e.g., "sidelink"). For example, uplink channel, downlink channel, etc., can be replaced with sidelink channel, and uplink link, downlink, etc., can be replaced with sidelink link.

In some embodiments, the terminal may be replaced by an access network device, a core network device, or a network device. In this case, the structure can also be configured such that the access network device, core network device, or network device has all or some of the functions of the terminal.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

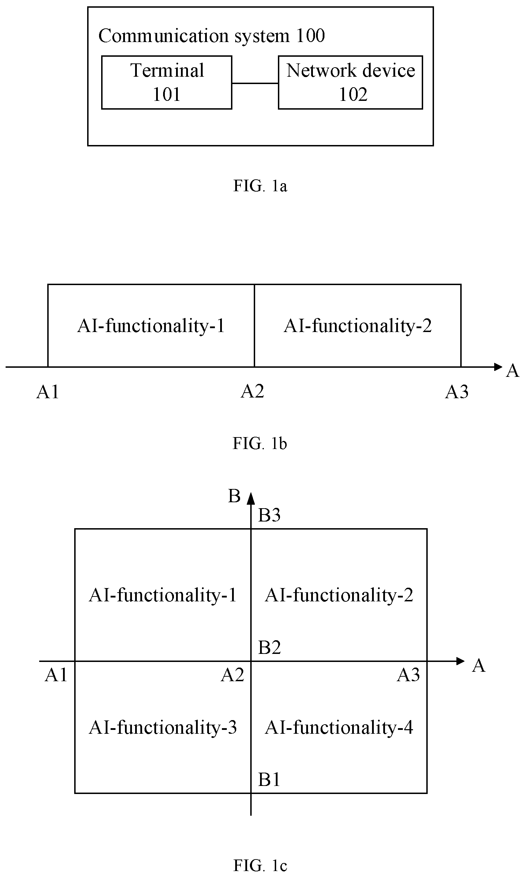

FIG. 1a is a schematic diagram of an architecture of a communication system according to an embodiment of the present disclosure. As shown in FIG. 1a, the communication system 100 includes a terminal 101, an access network device 102, and a core network device 103.

In some embodiments, terminal 101 includes, for example, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the access network device 102 is, for example, a node or device that accesses a terminal to a wireless network. The access network device may include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a Wi-Fi system.

In some embodiments, the technical solutions of the present disclosure can be applied to the Open RAN architecture. In this case, the interfaces between or within access network devices involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DUs and the DUs are centrally controlled by the CU, but it is not limited thereto.

In some embodiments, the core network device 103 may be a single device, including a first network element 1031, a second network element 1032, etc., or it may be multiple devices or a group of devices, each including all or part of the first network element 1031, the second network element 1032, etc. The network elements may be virtual or physical. The core network includes, for example, at least one of an Evolved Packet Core (EPC), a 5G Core Network (5GCN), and a Next Generation Core (NGC).

It can be understood that the communication system in the embodiments of the present disclosure is described for the purpose of more clearly illustrating the technical solutions of the embodiments of the present disclosure, and does not constitute a limitation on the technical solutions proposed in the embodiments of the present disclosure. As those skilled in the art would know, with the evolution of system architecture and the emergence of new business scenarios, the technical solutions proposed in the embodiments of the present disclosure are also applicable to similar technical problems.

The following embodiments of the present disclosure can be applied to the communication system 100 shown in FIG. 1a, or to some of the main bodies, but are not limited thereto. The main bodies shown in FIG. 1a are illustrative. The communication system may include all or some of the main bodies in FIG. 1a, or it may include main bodies other than those in FIG. 1a. The number and form of the main bodies are arbitrary. Each main body may be physical or virtual. The connection relationship between the main bodies is illustrative. The main bodies may not be connected or may be connected, and the connection may be in any way, which may be a direct connection or an indirect connection, a wired connection or a wireless connection.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems extended based upon them, etc. Furthermore, a combination of multiple systems (e.g., a combination of LTE or LTE-A with 5G) can be applied.

In some implementations, the widespread application of new radio technology has brought about tremendous changes to all aspects of people's lives. According to the application vision provided by the ITU (Telecommunication Union), NR technology will permeate all areas of future society, building a comprehensive information ecosystem centered on the users. The user communication speeds can reach 100 Mbit/s to 1 Gbit/s, which can support various service experiences such as mobile virtual reality; the peak communication speeds can reach 10 Gbit/s to 20 Gbit/s, with a traffic density up to 10 Mbit/s/m²,which can support more than a thousand-fold increase in mobile traffic; the communication connection density can reach 1 million/m², which can effectively support massive numbers of IoT devices; the communication transmission latency can be down to the millisecond level, which can meet the stringent requirements of vehicle networking and industrial control; the new radio communication can support communication transmission at speeds up to 500 km/h, which can provide a good user communication experience in high-speed environments such as high-speed rail. Therefore, the new radio technology can serve as a representative of new infrastructure, building a new information society.

In some implementations, AI (Artificial Intelligence) technology has achieved continuous breakthroughs in multiple fields. The ongoing development of fields such as intelligent voice and computer vision has not only brought a wide variety of applications to smart terminals, but also found widespread use in education, transportation, home, healthcare, retail, and security, bringing convenience to people's lives while promoting industrial upgrading across various sectors. AI technology is also accelerating its cross-disciplinary integration with other disciplines, combining knowledge from different fields while providing new directions and methods for their development. For example, to address the complex and ever-changing communication processes in new air interface communication technologies, AI technology is introduced to assist wireless air interface transmission technology, thereby improving communication transmission efficiency. For instance, in wireless AI research, AI application cases include: AI-based CSI (Channel State Information) enhancement, AI-based beam management, AI-based terminal positioning, etc.

In some implementations, two methods for managing the AI model lifecycle during communication are defined. One is a lifecycle management method based on AI-functionality, including activation, deactivation, or switching of AI-functionality, or fallback to non-AI processing methods. The other method allows multiple AI-functionalities to be included under an AI/ML (Machine Learning)-feature, with one AI-functionality corresponding to a series of parameter configuration items, and different parameter values can correspond to different AI-functionalities. However, in related technologies, how to construct AI-functionality based on different parameter values is not clearly defined. Since the lifecycle management of AI-functionalities can be performed based on the configuration parameters of the AI-functionalities, and the relationship between the configuration parameters and the lifecycle management of AI-functionalities is also unclear, this leads to a disorder in the determination method of AI-functionality based on configuration parameters and the lifecycle management of AI-functionality. For example, in this embodiment, the definition of AI-functionality is the same as AI functionality, and the definition of AI-feature is the same as AI feature.

In some implementations, both the terminal and the network device may include one or more AI-features. Different AI-features correspond to different AI functionalities during communication. Each AI-feature may include one or more AI functionalities, and the AI functionalities can be determined based on one or more configuration parameters. Different value ranges of the configuration parameters correspond to different AI-functionalities, the value ranges of the configuration parameters for different AI-functionalities do not overlap at all, and different value ranges of the configuration parameter correspond different AI functionalities on a one-to-one basis.

For example, FIG. 1b is a schematic diagram of an AI-functionality configuration method according to an embodiment of the present disclosure. As shown in FIG. 1b, the AI-functionalities under the same AI-feature are determined by the value range of the configuration parameter A. Different AI-functionalities are configured according to different value ranges of the configuration parameter A, and the value ranges of the configuration parameter A for different AI-functionalities do not overlap. For example, when the value range of the configuration parameter A is [A1, A2], it corresponds to AI-functionality-1 in the AI-feature; when the value range of the configuration parameter A is [A2, A3], it corresponds to AI-functionality-2 in the AI-feature.

FIG. 1c is a schematic diagram illustrating another AI-functionality configuration method according to an embodiment of the present disclosure. As shown in FIG. 1c, the AI-functionalities under the same AI-feature are determined by the value ranges of configuration parameter A and configuration parameter B. Different AI-functionalities can be jointly determined based on different value ranges of configuration parameter A and configuration parameter B. For example, when the value range of configuration parameter A is [A1, A2] and the value range of configuration parameter B is [B2, B3], it corresponds to AI-functionality-1 in the AI-feature; when the value range of configuration parameter A is [A2, A3] and the value range of configuration parameter B is [B2, B3], it corresponds to AI-functionality-2 in the AI-feature; when the value range of configuration parameter A is [A1, A2] and the value range of configuration parameter B is [B1, B2], it corresponds to AI-functionality-3 in the AI-feature; and when the value range of configuration parameter A is [A2, A3] and the value range of configuration parameter B is [B1, B2], it corresponds to AI-functionality-4 in the AI-feature. In the above embodiments, the AI-functionality is determined by configuration parameter A and/or configuration parameter B. However, in this embodiment, the number of corresponding types of configuration parameters is not limited. The AI-functionality can be allocated according to the value range of a one-dimensional configuration parameter, for example, the AI-functionality can be determined through the value of configuration parameter A or configuration parameter B. The AI functionality can also be allocated through the value range of multi-dimensional configuration parameters, for example, the AI-functionality can be determined through the value range of configuration parameter A, configuration parameter B, ..., configuration parameter N, etc.

For example, taking AI-based CSI compression as an example, both the terminal and network device are configured with an AI/ML feature used to compress CSI measured on the terminal side using an AI method, and to decompress the CSI information uploaded by the terminal on the network device side using an AI-based method. For this AI-feature, the following four AI-functionalities are defined, generating the mapping table below.

| | CSI-RS frequency | CSI-RS port |
|---|---|---|
| AI-functionality-1 | {16 RBs, 32 RBs, 48 RBs} | {16 ports, 32 ports} |
| AI-functionality-2 | {16 RBs, 32 RBs, 48 RBs} | {64 ports, 128 ports} |
| AI-functionality-3 | {96 RBs, 128 RBs} | {16 ports, 32 ports} |
| AI-functionality-4 | {96 RBs, 128 RBs} | {64 ports, 128 ports} |

As shown in the table above, these four AI-functionalities are determined by a frequency domain configuration parameter, CSI-RS (Channel State Information-Reference Signal) frequency, and an antenna configuration parameter, CSI-RS port. The CSI-RS frequency value in the terminal can be {16 RBs, 32 RBs, 48 RBs, 96 RBs, 128 RBs}, and the CSI-RS port value can be {16 ports, 32 ports, 64 ports, 128 ports}. When the AI-feature is activated in the terminal, the corresponding AI-functionality can be determined based on values of the CSI-RS frequency and CSI-RS port in the table above. For example, when the network device indicates a frequency domain configuration parameter of 32 RBs and an antenna configuration parameter of 64 ports, it is determined with reference to the above table that the CSI-RS frequency of 32 RBs and CSI-RS port of 64 ports correspond to AI-functionality-2. For instance, in this embodiment, the parameter value ranges of configuration parameters corresponding to the various AI-functionality-N are independent and do not overlap with each other.

In some implementations, the terminal needs to report the supported AI-functionality to the network device. For example, the terminal can also report the configuration parameters supported by the terminal based on the table above. For instance, using the table above as an example, the terminal reports to the network device that the value range of the supported CSI-RS frequency parameter is {16 RBs, 32 RBs, 48 RBs, 96 RBs}, and the value range of the CSI-RS port parameter is {16 ports, 32 ports, 64 ports}. The network device, referring to the table above, determines that the AI-functionality supported in the terminal is AI-functionality-1, AI-functionality-2, and AI-functionality-3. The network device then, based on the current communication conditions and the AI-functionalities supported by the terminal, sends the specific frequency domain configuration parameter and antenna configuration parameter to the terminal to invoke the corresponding AI-functionality-N in the terminal, enabling the terminal to activate AI-functionality-N based on the frequency domain configuration parameter and the antenna configuration parameter.

In some implementations, the network device can manage the lifecycle of AI-functionality through the configuration parameter. For example, when an AI-feature is activated, the corresponding AI-functionality-1 can be activated based on the value range of the configuration parameter; when an AI-feature is activated and the corresponding configuration parameter is reconfigured, AI-functionality-1 corresponding to the original configuration parameter value range is disabled, and AI-functionality-2 corresponding to the new configuration parameter value range is activated; when an AI-feature is activated and the corresponding configuration parameter is reconfigured, if there is no corresponding AI-functionality within the configuration parameter value range with reference to the table above, the terminal falls back to a non-AI processing method to process the configuration parameter.

With the above method, the mapping relationship between the values of the parameter set and the AI functionalities are configured in the network device and the terminal, the AI functionality can be configured for the terminal based on the parameter set with different values, thereby enabling the life cycle management of the AI functionality in the terminal, avoiding the problem of ambiguous configuration parameters, and clarifying the role of the configuration parameters.

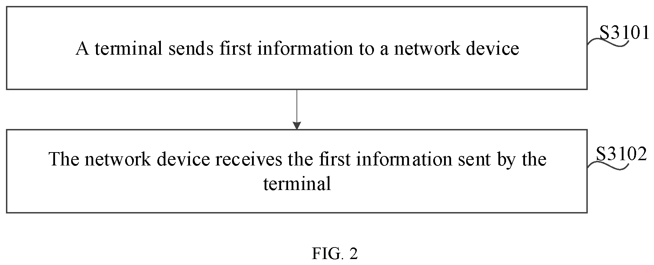

FIG. 2 is an interactive schematic diagram illustrating a communication method according to an embodiment of the present disclosure. As shown in FIG. 2, the embodiments of the present disclosure relate to a communication method performed by a terminal and a network device, the method including:
**In step S2101**, the terminal sends first information to the network device.

In some embodiments, the first information is used to indicate AI functionalities supported by the terminal. For example, the terminal is configured with multiple models, each corresponding to a different AI functionality. The terminal indicates the AI functionalities specified in the terminal to the network device through the first information, enabling the network device to perform lifecycle management of the AI functionalities in the terminal based on the first information. This lifecycle management action may include activating, deactivating, or switching the AI functionalities in the terminal.

In some embodiments, the AI functionalities are associated with values of parameters in a first parameter set, the first parameter set includes one or more configuration parameters, and different AI functionalities correspond to different value ranges of the configuration parameters in the first parameter set. For example, both the terminal and the network device are configured with a mapping relationship between AI functionalities and the corresponding parameter values in the first parameter set. The first parameter set may include one or more configuration parameters, and the same AI feature may include one or more AI functionalities. If there are multiple AI functionalities under the same AI functionality, the value ranges of the same type of configuration parameter in the first parameter set corresponding to different AI functionalities are different.

For example, the terminal is configured with AI feature-1, and this AI feature includes AI functionality-1, AI functionality-2, AI functionality-3, and AI functionality-4. Each of the first parameter sets corresponding to the multiple AI functionalities includes configuration parameter A and configuration parameter B. The value range of the corresponding first parameter set is determined by the values of configuration parameter A and configuration parameter B, the value range of the first parameter set corresponding to each AI functionality is different, and thus the corresponding AI functionality of the terminal can be indicated based on different values of configuration parameters, thus forming the mapping relationship as shown below:

| | Configuration parameter A | Configuration parameter B |
|---|---|---|
| AI Functionality-1 | {1,2,3} | {1,2} |
| AI Functionality-2 | {1,2,3} | {4,5} |
| AI Functionality-3 | {4,5} | {1,2} |
| AI Functionality-4 | {4,5} | {4,5} |

As shown in the mapping relationship above, the first parameter set corresponding to each AI functionality includes configuration parameter A and configuration parameter B. The values of configuration parameter A and configuration parameter B together constitute the value range of the first parameter set. Different value ranges corresponding to the first parameter set correspond to different AI functionalities under the same AI feature. Therefore, the value ranges of the first parameter set under the same AI feature are different from each other. It should be noted that in this embodiment, the configuration parameter type corresponding to the first parameter set can include multiple types, and the value range of the first parameter set can be determined according to the values of different types of configuration parameters.

In some embodiments, the first information includes the first parameter set, the first parameter set includes one or more configuration parameters and a value range for each configuration parameter. This first parameter set is used to indicate the network device to determine an AI functionality matching the first parameter set based on the mapping relationship between AI functionalities and the parameter sets, and to determine that this AI functionality is an AI functionality supported by the terminal.

Optionally, in some embodiments, an AI functionality is associated with a AI feature, and the AI feature includes one or more AI functionalities.

For example, the terminal is configured with at least one AI feature, each AI feature includes one or more AI functionalities, and these AI functionalities are all used to implement the corresponding AI feature. The value ranges of the configuration parameters in the first parameter set for different AI functionalities under the same AI feature are different. Therefore, only one AI functionality under the same AI feature can run in the terminal at any given time. The AI functionality associated with the first parameter set under the current AI feature can be determined based on the first parameter set.

**In step S2102**, the network device receives the first information sent by the terminal.

In some embodiments, the first information is used to indicate the AI functionality supported by the terminal. For example, the network device is configured with multiple models, and different models correspond to different AI functionalities. The network device can determine the AI functionalities supported by the terminal based on the first information reported by the terminal, and perform lifecycle management on the AI functionalities in the terminal based on the AI functionalities supported by the terminal. The lifecycle management action may include activating, deactivating, or switching the AI functionalities in the terminal.

For example, the first information reported by the terminal can be name information of the AI functionality supported by the terminal, or it can be different value range information of configuration parameters in the first parameter set corresponding to the AI functionality supported by the terminal. Based on the configured mapping relationship between the AI functionalities and the configuration parameter values, the network device determines the AI functionality that matches the value range information in the mapping relationship, as the AI functionality supported by the terminal. Specifically, the mapping relationship configured in the terminal is the mapping relationship between the AI functionalities supported by the terminal and the corresponding value ranges in the first parameter set, and the mapping relationship configured in the network device is the mapping relationship between the AI functionalities supported by the network device and the corresponding value ranges in the parameter set. Generally, the network device can support multiple AI functionalities, which include the AI functionalities supported by the terminal; therefore, the mapping relationship configured in the network device includes the mapping relationship in the terminal.

Optionally, in some embodiments, an AI functionality is associated with an AI feature, and the AI feature includes one or more AI functionalities.

For example, the network device is configured with at least one AI feature, and each AI feature includes one or more AI functionalities, all of the AI functionalities are used to implement the corresponding AI feature. Therefore, only one AI functionality can run under the same AI feature in the network device at any given time. The AI functionality associated with the first parameter set under the current AI feature can be determined based on the first parameter set mentioned above, as the AI functionality supported by the terminal.

Optionally, in some embodiments, the method further includes:
the network device generates second information based on the AI functionality, the second information includes a first configuration parameter, and the first configuration parameter is used to indicate the terminal to determine the associated first AI functionality based on the first configuration parameter; and
the network device sends the second information to the terminal.

For example, after determining an AI functionality supported by the terminal based on the first information, the network device determines the first parameter set corresponding to the AI functionality and a value range of one or more configuration parameters in the first parameter set according to the mapping relationship, generates the second information based on the first parameter set, where the second information includes the first configuration parameter, and the first configuration parameter is a configuration parameter in the first parameter set, which includes a configuration parameter type and a configuration parameter value, and sends the second information to the terminal, and the terminal can determine the associated first AI functionality based on the first configuration parameter in the second information. After determining the AI functionalities supported by the terminal and the first parameter set corresponding to the AI functionalities according to the first information, the network device selects a configured first AI functionality from the multiple AI functionalities according to the communication conditions and requirements in current network environment, determines the first configuration parameter corresponding to the first AI functionality according to the mapping relationship, generates the second information based on the first configuration parameter, and sends the second information to the terminal.

Optionally, in some embodiments, the above step of generating the second information based on AI functionality includes:
the network device obtains the mapping relationship between AI functionalities and the first parameter sets;
the network device determines the first configuration parameter based on the mapping relationship; and
the network device generates the second information based on the first configuration parameter.

For example, in this embodiment, after the network device determines the AI functionalities supported by the terminal, it obtains the mapping relationship between the AI functionalities and the first parameter sets. This mapping relationship includes the correspondence between the AI functionalities and parameter value ranges of one or more configuration parameters. The network device determines the value range of the first parameter set corresponding to the AI functionality based on this mapping relationship. Based on the current network communication requirements and network communication conditions, the first configuration parameter used for indicating the AI functionality is determined from the mapping relationship, and the second information is generated based on the first configuration parameter. The first configuration parameter includes value ranges of one or more configuration parameters, and by referring to the above mapping relationship, it can determine the first AI functionality corresponding to the first configuration parameter. The network device indicates the AI functionality that needs to be activated currently to the terminal by indicating the first configuration parameter, thereby realizing the lifecycle management of the AI functionalities in the terminal.

Optionally, in some embodiments, the step of obtaining the mapping relationship between the AI functionalities and the first parameter set includes:
the network device obtains a configuration protocol; and
the network device determines the mapping relationship between the first parameter set and the AI functionalities according to the configuration protocol.

For example, the mapping relationship in the network device is set in the terminal through the configuration protocol, and the mapping relationship in the terminal can be determined according to the configuration protocol. The contents included in the mapping relationship are the same as those in the above embodiments, and reference can be made to the above embodiments, which will not be repeated here.

Optionally, in some embodiments, the method further includes:
the network device receives third information sent by the terminal; and
the network device activates the AI functionality corresponding to the first configuration parameter in the network device according to the third information.

For example, after the terminal activates the corresponding first AI functionality according to the first configuration parameter, it sends third information to the network device, and this third information is used to indicate that the first AI functionality in the terminal is activated. Based on this third information, the first AI functionality in the network device is also activated. In subsequent communication, the terminal and the network device can perform communication based on this first AI functionality.

Optionally, in some embodiments, the method further includes:
the terminal receives second information sent by the network device, the second information includes a first configuration parameter, and the first configuration parameter is used to configure a configuration parameter in the first parameter set;
the terminal determines the first configuration parameter and associates the AI functionality; and
the terminal determines the first AI functionality corresponding to the first configuration parameter.

For example, the terminal receives the second information sent by the network device, obtains the first configuration parameter in the second information, and when determining that the first configuration parameter is a configuration parameter associated with an AI functionality, determines the first AI functionality corresponding to the first configuration parameter according to the mapping relationship. If the terminal determines that the first configuration parameter is not a configuration parameter associated with an AI functionality, it processes the first configuration parameter according to a preset parameter processing method.

Optionally, in some embodiments, determining the first AI functionality corresponding to the first configuration parameter includes:
the terminal obtains the mapping relationship between the AI functionalities and the first parameter set; and
the terminal determines the first AI functionality that matches the first configuration parameter from the mapping relationship.

For example, in this embodiment, the mapping relationship between one or more AI functionalities corresponding to the feature configured in the terminal and the first parameter set is obtained, and based on the first configuration parameter in the second information, the first AI functionality matching the first configuration parameter is determined. The first configuration parameter includes one or more configuration parameters and different value ranges for different types of configuration parameters. The value ranges of the one or more configuration parameters together constitute the value range of the first configuration parameter. The AI functionality matching the configuration parameter type and configuration parameter value range corresponding to the first configuration parameter is determined from the mapping relationship, as the first AI functionality matching the first configuration parameter.

Optionally, in some embodiments, the method further includes:
determining no AI functionality matching the first configuration parameter exists in the mapping relationship, and processing the first configuration parameter through a non-AI processing procedure.

For example, the associated AI functionality is determined based on the first configuration parameter in the second information. When there is no AI functionality matching the first configuration parameter in the mapping relationship corresponding to the terminal, that is, when the value range of one or more configuration parameters corresponding to each AI functionality in the mapping relationship is different from the value range of the first configuration parameter, the terminal determines that the first configuration parameter is a non-AI processing configuration parameter and processes the first configuration parameter through a non-AI processing procedure.

Optionally, in some embodiments, the above step of "obtaining the mapping relationship between the AI functionalities and the first parameter set" includes:
the terminal obtains a configuration protocol; and
the terminal determines the mapping relationship according to the configuration protocol.

For example, in this embodiment, the mapping relationship in the terminal is set in the terminal through the configuration protocol, and the mapping relationship in the terminal can be determined according to the configuration protocol. The contents included in this mapping relationship are the same as those in the above embodiments, and reference can be made to the above embodiments, which will not be repeated here.

Optionally, in some embodiments, the method further includes:
the terminal determines that the first AI functionality does not match the second AI functionality currently running on the terminal, and disables the second AI functionality; and
the terminal activates the first AI functionality.

For example, when it is determined that the first AI functionality corresponding to the first configuration parameter does not match the second AI functionality currently running on the terminal, this second information is used to indicate switching of the AI functionality in the terminal. The currently running second AI functionality is disabled, and the first AI functionality in the terminal is activated.

Optionally, in some embodiments, the method further includes:
the terminal determines that AI functionality in the terminal is activated, and sends third information to the network device, the third information is used to indicate the network device to activate the first AI functionality in the network device according to the third information.

For example, after determining that the first AI functionality is activated, the terminal sends the third information to the network device, and upon receiving the third information, the network device activates the first AI functionality in the network device. This enables the network device and the terminal to perform communication based on the first AI functionality.

In some embodiments, the names of information, etc., are not limited to the names described in the embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip "can be used interchangeably.

In some embodiments, the terms such as "radio", "wireless", "radio access network (RAN)", "access network (AN)", and "RAN-based" can be used interchangeably.

In some embodiments, the terms such as "synchronization signal (SS)", "synchronization signal block (SSB)", "reference signal (RS)", "pilot", and "pilot signal" can be used interchangeably.

In some embodiments, "acquire", "obtain", "get", "receive", "transmit", "bidirectional transmission", and "send and/or receive" can be used interchangeably and can be interpreted as receiving from other entities, obtaining from protocols, obtaining from higher layers, obtaining through self-processing, or autonomous implementation, among other meanings.

In some embodiments, terms such as "send", "transmit", "report", "distribute", "transfer", "bidirectional transmission", "send and/or receive" can be used interchangeably.

In some embodiments, terms such as "certain", "preset", "predetermined", "set", "indicated", "a certain", "any", and "first" can be used interchangeably. "Certain A", "preset A", "predetermined A", "set A", "indicated A", "a certain A", "any A, "and "first A" can be interpreted as A pre-defined in a protocol or the like, or as A obtained through setting, configuration, or indication, or as specific A, a certain A, any A, or first A, but are not limited thereto.

In some embodiments, the determination or judgment can be made by a value represented by 1 bit (0 or 1), or by a value represented by true or false (boolean), or by comparison of numerical values (e.g., a compared with a predetermined value), but is not limited thereto.

In some embodiments, "not expecting to receive" can be interpreted as not receiving on time domain resources and/or frequency domain resources, or as not performing subsequent processing on data after receiving the data; "not expecting to send" can be interpreted as not sending, or as sending but not expecting the receiver to respond to the sent content.

With the above method, the mapping relationship between parameter values of the parameter set and AI functionalities is configured in both the network device and the terminal, which clarifies the correspondence between configuration parameters and AI functionality lifecycle management, thereby enabling lifecycle management of AI functionalities based on the parameter set.

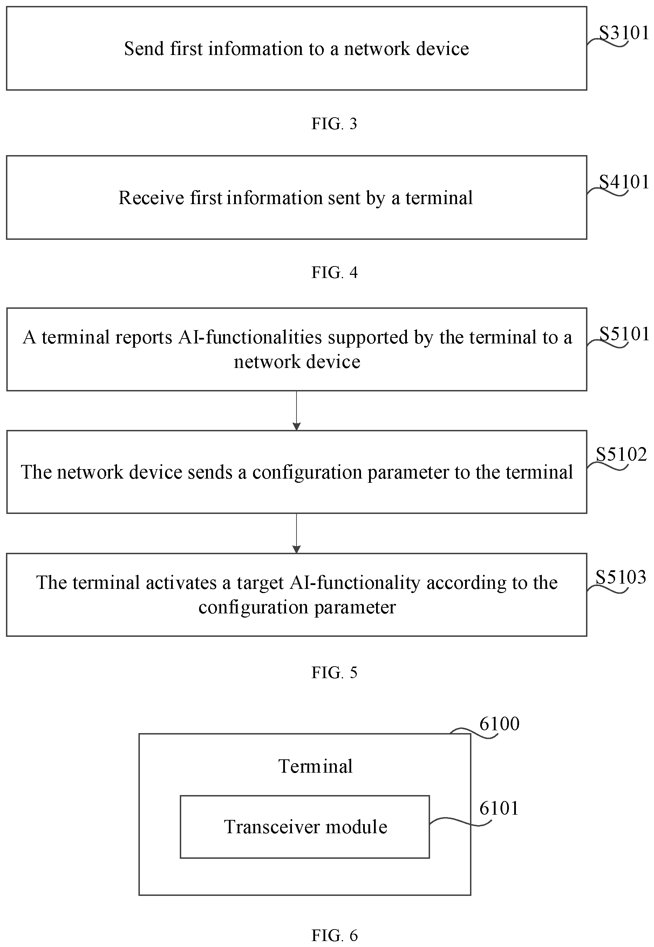

FIG. 3 is a schematic flowchart illustrating a communication method according to an embodiment of the present disclosure. As shown in FIG. 3, the communication method involved in this embodiment is performed by a terminal, and the method includes:
**In step S3101**, sending first information to a network device.

In some embodiments, the first information is used to indicate AI functionalities supported by the terminal. For example, the terminal is configured with multiple models, different models correspond to different AI functionalities, and the AI functionalities specified in the terminal is indicated to the network device through the first information, enabling the network device to perform lifecycle management of the AI functionalities in the terminal based on the first information. This lifecycle management action may include activating, deactivating, or switching the AI functionalities in the terminal.

In some embodiments, the AI functionality is associated with a parameter value in a first parameter set, the first parameter set includes one or more configuration parameters, and different AI functionalities correspond to different value ranges of the configuration parameters in the first parameter set. For example, both the terminal and network device are configured with a mapping relationship between AI functionalities and the corresponding parameter values in the first parameter set. The first parameter set may include one or more configuration parameters, and the same AI feature may include one or more AI functionalities. If multiple AI functionalities exist under the same AI functionality, the value ranges of the same type of configuration parameter in the first parameter set corresponding to different AI functionalities are different.

For the optional implementations of step S3101, reference can be made to the optional implementations of step S2101 in FIG. 2 and other related parts in the embodiments involved in FIG. 2, which will not be repeated here.

In some embodiments, the AI functionality is associated with a AI feature, and the AI feature include one or more AI functionalities.

In some embodiments, the method further includes:
receiving second information sent by the network device, where the second information includes a first configuration parameter, and the first configuration parameter is used to indicate configuration parameters in the first parameter set and value ranges for the configuration parameters;
determining the first configuration parameter and associating AI functionalities; and
determining a first AI functionality corresponding to the first configuration parameter.

In some embodiments, determining the first AI functionality corresponding to the first configuration parameter includes:
obtaining a mapping relationship between AI functionalities and the first parameter set; and
determining the first AI functionality that matches the first configuration parameter from the mapping relationship.

In some embodiments, the method further includes:
determining that there is no AI functionality matching the first configuration parameter in the mapping relationship, and processing the first configuration parameter through a non-AI processing procedure.

In some embodiments, obtaining the mapping relationship between AI functionalities and the first parameter set includes:
obtaining a configuration protocol; and
determining the mapping relationship according to the configuration protocol.

In some embodiments, the method further includes:
determining that the first AI functionality does not match the second AI functionality currently running on the terminal, and disabling the second AI functionality; and
activating the first AI functionality.

In some embodiments, the method further includes:
determining that the first AI functionality in the terminal is activated, sending third information to the network device, where the third information is used to indicate the network device to activate the first AI functionality in the network device according to the third information.

With the above method, the first information is sent to the network device, the first information is used to indicate the AI functionalities supported by the terminal, the AI functionalities are associated with values of parameters in a first parameter set, the first parameter set includes one or more configuration parameters, and different AI functionalities correspond to different value ranges for the configuration parameters in the first parameter set. Accordingly, the mapping relationship between AI functionalities and values of the parameter set is configured, and by configuring parameter sets with different values, the corresponding AI functionalities are determined, enabling lifecycle management of AI functionalities based on the parameter set.

FIG. 4 is a schematic flowchart illustrating a communication method according to an embodiment of the present disclosure. As shown in FIG. 4, the communication method involved in this embodiment is performed by a network device, and the method includes:
**In step S4101**, receiving first information sent by a terminal.

In some embodiments, the first information is used to indicate AI functionalities supported by the terminal. For example, the network device is configured with multiple models, and different models correspond to different AI functionalities. The network device can determine the AI functionalities supported by the terminal based on the first information reported by the terminal, and perform lifecycle management on the AI functionalities in the terminal based on the AI functionalities supported by the terminal. The lifecycle management action may include activating, deactivating, or switching the AI functionalities in the terminal.

In some embodiments, the first information reported by the terminal may be the name information of the AI functionality supported by the terminal, or different value range information of configuration parameters in the first parameter set corresponding to the AI functionality supported by the terminal. The network device determines, based on the mapping relationship between the configured AI functionalities and the configuration parameter values, the AI functionality in the mapping relationship that matches the value range information, as the AI functionality supported by the terminal. The mapping relationship configured in the terminal is the mapping relationship between the AI functionalities supported by the terminal and the corresponding value ranges in the first parameter set, and the mapping relationship configured in the network device is the mapping relationship between the AI functionalities supported by the network device and the corresponding value ranges in the parameter set. Generally, the network device can support multiple AI functionalities, including the AI functionalities supported by the terminal; therefore, the mapping relationship configured in the network device includes the mapping relationship in the terminal.

In some embodiments, the AI functionality is associated with an AI feature, and the AI feature include one or more AI functionalities.

In some embodiments, the method further includes:
generating second information based on the AI functionalities, where the second information includes a first configuration parameter, and the first configuration parameter is used to indicate a configuration parameter in the first parameter set and a value range of the configuration parameter; and
sending the second information to the terminal.

In some embodiments, the above step of generating the second information based on the AI functionalities includes:
obtaining a mapping relationship between the AI functionalities and the first parameter set;
determining the first configuration parameter based on the mapping relationship; and
generating the second information based on the first configuration parameter.

In some embodiments, the above step of obtaining the mapping relationship between the AI functionalities and the first parameter set includes:
obtaining a configuration protocol; and
determining the mapping relationship between the AI functionalities and the first parameter set according to the configuration protocol.

In some embodiments, the method further includes:
receiving third information sent by the terminal;
activating a first AI functionality corresponding to the first configuration parameter in the network device based on the third information.

For the optional implementations of step S4101, reference can be made to the optional implementations of step S2102 in FIG. 2 and other related parts in the embodiments involved in FIG. 2, which will not be repeated here.

With the above method, the first information sent by the terminal is received, the first information is used to indicate the AI functionalities supported by the terminal, the AI functionalities are associated with values of parameters in a first parameter set, the first parameter set includes one or more configuration parameters, and different AI functionalities correspond to different value ranges of the configuration parameters in the first parameter set. Accordingly, a mapping between the values of the configuration parameter set and the AI functionalities is configured in the network device, avoiding the problem of disordered AI functionality lifecycle management caused by ambiguous parameter configuration.

FIG. 5 is a schematic diagram illustrating a communication method according to an embodiment of the present disclosure. As shown in FIG. 5, the embodiments of the present disclosure relates to a communication method, which includes:
**In step S5101**, a terminal reports AI-functionalities supported by the terminal to a network device.

In some implementations, the terminal may also report value ranges of configuration parameters corresponding to the supported AI-functionalities based on the mapping table in the above implementations. The network device determines the AI-functionalities supported by the terminal by referring to the mapping table based on the value range.

**In step S5102,** the network device sends a configuration parameter to the terminal.

For example, after determining the AI-functionalities supported by the terminal, the network device selects a target AI-functionality currently needed from the AI-functionalities supported by the terminal based on the current network environment and communication requirements, obtains a configuration parameter corresponding to the target AI-functionality and a value range of the configuration parameter by referring to the mapping table mentioned above, and sends the configuration parameter to the terminal to indicate the terminal to activate the corresponding target AI-functionality according to the configuration parameter.

**In step S5103**, the terminal activates the target AI functionality according to the configuration parameter.

For example, the terminal determines the target AI-functionality corresponding to the current value range of the configuration parameter based on the configuration parameter and the value range of the configuration parameter by referring to the mapping table mentioned above, and activates the target AI-functionality.

In some implementations, taking the AI-based CSI compression described above as an example, after AI-based CSI is activated, the network device configures the terminal with a CSI-RS frequency of 32 RBs and a CSI-RS port of 16 ports, and the terminal determines, based on the value range of these configuration parameters by referring to the mapping table mentioned above, that the CSI-RS frequency of 32 RBs and the CSI-RS port of 16 ports correspond to AI-functionality-1, and activates AI-functionality-1 in the terminal. After the AI-based CSI compression is activated, when the network device configures the terminal with a CSI-RS frequency of 32 RBs and a CSI-RS port that is switched from 16 ports to 64 ports, the AI-functionality currently used in the terminal is switched from AI-functionality-1 to AI-functionality-2. After the AI-based CSI compression is activated, when the network device configures the terminal with a CSI-RS frequency of 32RBs and a CSI-RS port that is switched from 16 ports to 256 ports, if there is no AI-functionality-N corresponding to the configuration parameters of CSI-RS frequency of 32RBs and CSI-RS port of 256 ports in the mapping table above, a non-AI processing method is used to process the configuration parameters.

In some implementations, the network device receives first information, the first information is used to indicate the AI functionality supported by the terminal, and the AI functionality is determined by values of one or more configuration parameters. For example, the AI functionality supported by the terminal, as well as the configuration parameter associated with the AI functionality and the value range of the configuration parameter, can be determined by referring to the mapping table described above.

Optionally, in some implementations, an AI-feature in the network device may include multiple AI-functionalities, and the configuration parameters and/or the value ranges of the configuration parameters corresponding to different AI-functionalities under the same AI-feature are different, that is, the value ranges of the configuration parameters corresponding to the respective AI-functionalities do not overlap.

Optionally, in some embodiments, the network device sends second information to the terminal, the second information is used to configure a first parameter set, and the first parameter set includes one or more configuration parameter types and value ranges for one or more configuration parameters. The first parameter set is associated with AI functionalities, and the terminal can determine a target AI functionality indicated by the network device by referring to the mapping table described above based on the first parameter set.

Optionally, in some implementations, after determining that the AI-feature in the terminal is activated, the network device determines the AI-functionalities supported by the terminal based on the first information, determines the parameter set of the configuration parameters corresponding to the supported AI-functionalities by referring to the above mapping table, and determines the target parameter corresponding to the target AI-functionality to be invoked from the parameter set according to the parameter set and the communication requirements of the current network environment.

Optionally, in some implementations, after determining that the AI feature is activated in the terminal, the network device sends second information to the terminal according to the AI functionality supported by the terminal, to indicate the terminal to activate the target AI functionality corresponding to the second information. After determining that the terminal has completed the activation of the target AI functionality, the network device initiates the network operation corresponding to the activation of the target AI functionality.

Optionally, in some implementations, in a case where the terminal determines, based on the first parameter set in the second information and by referring to the above mapping relationship, that the target AI-functionality corresponding to the first parameter set is different from the AI-functionality currently running on the terminal, the terminal disables the currently used AI-functionality based on the first parameter set.

Optionally, in some implementations, in a case where the terminal determines, based on the first parameter set sent by the network device and by referring to the above mapping table, that the terminal does not support the AI-functionality corresponding to the first parameter set, the terminal determines to use a non-AI processing method, that is, the terminal uses a preset processing method to process the first parameter set.

With the above method, an AI functionality determining method and a corresponding lifecycle management method for AI functionalities are proposed, the corresponding AI functionalities are determined based on configuration parameters, avoiding the problem of AI functionality disorder caused by configuration parameters, and clarifying the relationship between configuration parameters and the lifecycle management of AI functionalities.

The embodiments of the present disclosure also provide an apparatus for implementing any of the above methods. For example, an apparatus is provided that includes units or modules for implementing the steps performed by the terminal in any of the above methods. Alternatively, another apparatus is provided that includes units or modules for implementing the steps performed by the network device (e.g., an access network device, a core network functional node, a core network device, etc.) in any of the above methods.

It should be understood that the division of units or modules in the above apparatuses is only a logical functional division, and in actual implementations, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor is, for example, a general-purpose processor, such as a Central Processing Unit (CPU) or a microprocessor, and the memory is a memory internal or external to the apparatus. Alternatively, the units or modules in the apparatus may be implemented in the form of hardware circuits, and the functionality of some or all of the units or modules may be realized by designing the hardware circuits, which can be understood as one or more processors. For example, in an implementation, the hardware circuit is an application-specific integrated circuit (ASIC), and the functionality of some or all of the units or modules may be realized by designing the logical relationships between the components within the circuit. For another example, in another implementation, the hardware circuit may be implemented by programmable logic devices (PLDs), such as a field-programmable gate array (FPGA), which may include a large number of logic gate circuits, and the connection relationships between the logic gate circuits are configured through configuration files, thereby achieving the functionality of some or all of the units or modules. All units or modules of the above apparatuses can be implemented entirely in the form of a processor invoking software, entirely in the form of hardware circuits, or partially by a processor invoking software with the remainder implemented by hardware circuits.

In the embodiments of the present disclosure, the processor is a circuit with signal processing capabilities. In an implementation, the processor can be a circuit with capabilities of reading and executing instructions, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented through an application-specific integrated circuit (ASIC) or programmable logic devices (PLDs), such as an FPGA. In the reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

FIG. 6 is a schematic structural diagram of a terminal 6100 proposed in an embodiment of the present disclosure. As shown in FIG. 6, the terminal 6100 may include a transceiver module 6101. In some embodiments, the transceiver module 6101 is configured to send first information to a network device. The first information is used to indicate AI functionalities supported by the terminal. The AI functionalities are associated with values of parameters in a first parameter set. The first parameter set includes one or more configuration parameters, and different AI functionalities correspond to different value ranges of the configuration parameters in the first parameter set. Optionally, the transceiver module is configured to perform at least one of the communication steps such as sending and/or receiving performed by the terminal 101 in any of the above methods, which will not be repeated here.

In some embodiments, the transceiver module may include a transmitting module and/or a receiving module, and the transmitting module and the receiving module may be separate or integrated. Optionally, the transceiver module is interchangeable with a transceiver.

In some embodiments, the transceiver module may be a single module or may include multiple sub-modules. Optionally, the multiple sub-modules may respectively perform all or part of the steps required to be performed by the processing module.

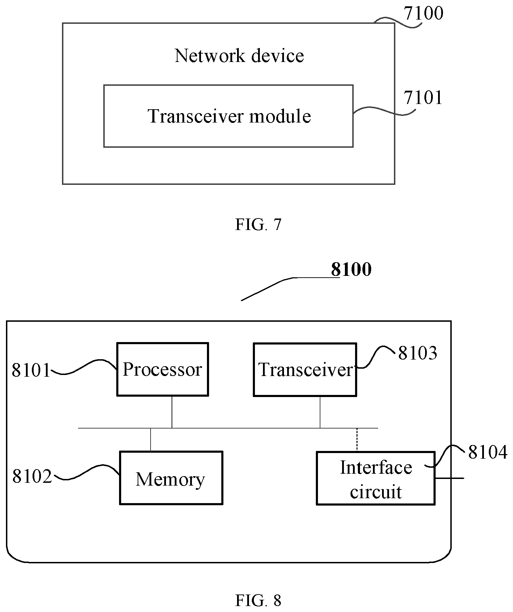

FIG. 7 is a schematic structural diagram of a network device 7100 proposed in an embodiment of the present disclosure. The network device 7100 may be an access network device, a core network device, or a terminal (e.g., a user equipment), or may be a chip, chip system, or processor that supports the network device in implementing any of the above methods, or may be a chip, chip system, or processor that supports the terminal in implementing any of the above methods. The network device 7100 may include a transceiver module 7101, configured to receive first information sent by a terminal. The first information indicates AI functionalities supported by the terminal. The AI functionalities are associated with values of parameters in a first parameter set. The first parameter set includes one or more configuration parameters, and different AI functionalities correspond to different value ranges of the configuration parameters in the first parameter set. Optionally, the transceiver module 7101 is configured to perform at least one of the communication steps such as sending and/or receiving that are performed by the network device 102 in any of the above methods, which will not be repeated here.

In some embodiments, the transceiver module may include a transmitting module and/or a receiving module, and the transmitting module and the receiving module may be separate or integrated. Optionally, the transceiver module is interchangeable with a transceiver.

FIG. 8 is a schematic structure diagram of a communication device 8100 proposed in an embodiment of the present disclosure. The communication device 8100 can be a network device (e.g., access network device, core network device, etc.), or a terminal (e.g., user equipment, etc.), can be a chip, chip system, or processor that supports the network device in implementing any of the above methods, or can be a chip, chip system, or processor that supports the terminal in implementing any of the above methods. The communication device 8100 can be configured to implement the methods described in the above method embodiments; for details, reference can be made to the description in the above method embodiments.

As shown in FIG. 8, the communication device 8100 includes one or more processors 8101. The processor 8101 can be a general-purpose processor or a dedicated processor, such as a baseband processor or a central processor. The baseband processor can be configured to process communication protocols and communication data, and the central processor can be configured to control a communication device (e.g., a base station, a baseband chip, a terminal device, a terminal device chip, a DU, a CU, or the like), execute programs, and process program data. Optionally, the communication device 8100 can be configured to perform any of the above methods. Optionally, one or more processors 8101 can be configured to invoke instructions to cause the communication device 8100 to perform any of the above methods.

In some embodiments, the communication device 8100 further includes one or more transceivers 8102. When the communication device 8100 includes one or more transceivers 8102, the transceiver 8102 performs at least one of the communication steps such as sending and/or receiving in the above methods, and the processor 8101 performs at least one of the other steps. In optional embodiments, the transceiver may include a receiver and/or a transmitter, and the receiver and the transmitter may be separate or integrated. Optionally, the terms transceiver, transceiver unit, transceiving machine, transceiver circuit, interface circuit, interface, etc., can be used interchangeably; the terms transmitter, transmitter unit, transmitting machine, transmitter circuit, etc., can be used interchangeably; and the terms receiver, receiver unit, receiving machine, receiving circuit, etc., can be used interchangeably.

In some embodiments, the communication device 8100 further includes one or more memories 8103 for storing data. Optionally, all or part of the memories 8103 may be located outside the communication device 8100. In optional embodiments, the communication device 8100 may include one or more interface circuits 8104. Optionally, the interface circuit 8104 is connected to the memory 8102, can be configured to receive data from the memory 8102 or other devices, and can be configured to send data to the memory 8102 or other devices. For example, the interface circuit 8104 can read data stored in the memory 8102 and send the data to the processor 8101.

The communication device 8100 described in the above embodiments may be a network device or a terminal, the scope of the communication device 8100 described in the present disclosure is not limited thereto, and the structure of the communication device 8100 may not be limited by FIG. 8. The communication device may be an independent device or may be part of a larger device. For example, the communication device may be: (1) an independent integrated circuit IC, or chip, or chip system or subsystem; (2) a collection of one or more ICs, optionally, the IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others, etc.

The modules and/or devices described in the various embodiments, such as virtual devices, physical devices, and chips, can be combined in any way or separated as needed. Optionally, some or all of the steps can also be performed collaboratively by multiple modules and/or devices, which is not limited here.

The present disclosure also proposes a storage medium storing instructions that, when executed on a communication device 8100, cause the communication device 8100 to perform any of the above methods. Optionally, the storage medium is an electronic storage medium. Optionally, the storage medium is a computer-readable storage medium, but it is not limited thereto; it may also be a storage medium readable by other devices. Optionally, the storage medium may be a non-transitory storage medium, but it is not limited thereto; it may also be a transitory storage medium.

The present disclosure also provides a program product that, when executed by the communication device 8100, causes the communication device 8100 to perform any of the above methods. Optionally, the program product is a computer program product.

The present disclosure also proposes a computer program that, when run on a computer, causes the computer to perform any of the above methods.

## Claims

1. A communication method, performed by a terminal, the method comprising:
sending first information to a network device, wherein the first information is used to indicate AI functionalities supported by the terminal, the AI functionalities are associated with values of parameters in a first parameter set, the first parameter set comprises one or more configuration parameters, and different AI functionalities correspond to different value ranges of the configuration parameters in the first parameter set.

2. The method according to claim 1, wherein the AI functionality is associated with an AI feature, and the AI feature comprises one or more AI functionalities.

3. The method according to claim 1, wherein the method further comprises:
receiving second information sent by the network device, wherein the second information comprises a first configuration parameter, and the first configuration parameter is used to indicate a configuration parameter in the first parameter set and a value range of the configuration parameter;
determining the first configuration parameter and associating the AI functionalities; and
determining a first AI functionality corresponding to the first configuration parameter.

4. The method according to claim 2, wherein determining the first AI functionality corresponding to the first configuration parameter comprises:
obtaining a mapping relationship between the AI functionalities and the first parameter set; and
determining the first AI functionality that matches the first configuration parameter from the mapping relationship.

5. The method according to claim 3, wherein the method further comprises:
determining that there is no AI functionality that matches the first configuration parameter in the mapping relationship, and processing the first configuration parameter through a non-AI processing procedure.

6. The method according to claim 4, wherein obtaining the mapping relationship between the AI functionalities and the first parameter set comprises:
obtaining a configuration protocol; and
determining the mapping relationship according to the configuration protocol.

7. The method according to any one of claims 3-6, wherein the method further comprises:
determining that the first AI functionality does not match a second AI functionality that is currently running on the terminal, and disabling the second AI functionality; and
activating the first AI functionality.

8. The method according to claim 7, wherein the method further comprises:
determining that the first AI functionality is activated in the terminal, and sending third information to the network device, wherein the third information is used to indicate the network device to activate the first AI functionality in the network device.

9. A communication method, performed by a network device, the method comprising:
receiving first information sent by a terminal, wherein the first information is used to indicate AI functionalities supported by the terminal, the AI functionalities are associated with values of parameters in a first parameter set, the first parameter set comprises one or more configuration parameters, and different AI functionalities correspond to different value ranges of the configuration parameters in the first parameter set.

10. The method according to claim 9, wherein the AI functionality is associated with an AI feature, and the AI feature comprises one or more AI functionalities.

11. The method according to claim 9, wherein the method further comprises:
generating second information according to the AI functionalities, wherein the second information comprises a first configuration parameter, and the first configuration parameter is used to indicate a configuration parameter in the first parameter set and a value range of the configuration parameter; and
sending the second information to the terminal.

12. The method according to claim 11, wherein generating the second information according to the AI functionalities comprises:
obtaining a mapping relationship between the AI functionalities and the first parameter set;
determining the first configuration parameter according to the mapping relationship; and
generating the second information according to the first configuration parameter.

13. The method according to claim 12, wherein obtaining the mapping relationship between the AI functionalities and the first parameter set comprises:
obtaining a configuration protocol; and
determining the mapping relationship between the AI functionalities and the first parameter set according to the configuration protocol.

14. The method according to any one of claims 11-13, wherein the method further comprises:
receiving third information sent by the terminal; and
activating a first AI functionality corresponding to the first configuration parameter in the network device according to the third information.

15. A terminal, comprising:
a transceiver module, configured to send first information to a network device, wherein the first information is used to indicate AI functionalities supported by the terminal, the AI functionalities are associated with values of parameters in a first parameter set, the first parameter set comprises one or more configuration parameters, and different AI functionalities correspond to different value ranges of the configuration parameters in the first parameter set.

16. A network device, comprising:
a transceiver module, configured to receive first information sent by a terminal, wherein the first information is used to indicate AI functionalities supported by the terminal, the AI functionalities are associated with values of parameters in a first parameter set, the first parameter set comprises one or more configuration parameters, and different AI functionalities correspond to different value ranges of the configuration parameters in the first parameter set.

17. A terminal, comprising:
one or more processors; and
a memory coupled to the one or more processors, the memory comprising executable instructions that, when executed by the one or more processors, cause the terminal to perform the communication method according to any one of claims 1-8.

18. A network device, comprising:
one or more processors; and
a memory coupled to the one or more processors, the memory comprising executable instructions that, when executed by the one or more processors, cause the first device to perform the communication method according to any one of claims 9-14.

19. A communication system, comprising a terminal and a network device, wherein the terminal is configured to implement the communication method according to any one of claims 1-8, and the network device is configured to implement the communication method according to any one of claims 9-14.

20. A storage medium storing instructions, wherein the instructions, when executed on a communication device, cause the communication device to perform the communication method according to any one of claims 1-8 or claims 9-14.
